Europäisches Patentamt

(19) European Patent Office

Office européen des brevets

(11) EP 0 782 973 B1

(12) **FASCICULE DE BREVET EUROPEEN**

(45) Date de publication et mention
de la délivrance du brevet:
**20.01.1999 Bulletin 1999/03**

(51) Int. Cl.$^6$: **C03B 5/235**

(21) Numéro de dépôt: **96402833.6**

(22) Date de dépôt: **19.12.1996**

(54) **Procédé de chauffage de la charge d'un four de verre**

Verfahren zum Erhitzen der Charge eines Glasschmelzofens

Process for heating the charge of a glass melting furnace

(84) Etats contractants désignés:
**BE DE ES GB IT NL**

(30) Priorité: **05.01.1996 FR 9600076**

(43) Date de publication de la demande:
**09.07.1997 Bulletin 1997/28**

(73) Titulaire:
**L'AIR LIQUIDE, SOCIETE ANONYME POUR
L'ETUDE ET L'EXPLOITATION DES PROCEDES
GEORGES CLAUDE
75321 Paris Cédex 07 (FR)**

(72) Inventeurs:
- **Duchateau, Eric
  Clarendon Hills, Illinois 601514 (US)**
- **Philippe, Louis
  Oakbrook Terrace, Illinois 60181 (US)**
- **Jouvaud, Dominique
  75015 Paris (FR)**
- **Plessier, Robert
  13002 Marseille (FR)**
- **Pivard, Claude
  75015 Paris (FR)**

- **Lepoutre, Etienne
  78100 St.-Germain-en-Laye (FR)**
- **Duboudin, Jean-Thierry
  94300 Vincennes (FR)**

(74) Mandataire: **Vesin, Jacques et al
L'AIR LIQUIDE, SOCIETE ANONYME
POUR L'ETUDE ET L'EXPLOITATION
DES PROCEDES GEORGES CLAUDE
75, quai d'Orsay
75321 Paris Cédex 07 (FR)**

(56) Documents cités:
EP-A- 0 335 728        WO-A-94/06723
DE-A- 4 142 401        FR-A- 2 728 254
US-A- 5 242 296

- GLASS INDUSTRY, vol. 76, no. 9, 1 Août 1995,
  pages 18, 23-26, XP000521920 TAYLOR C L:
  "DEVELOPMENT OF A LOW-EMISSIONS, MULTI-
  FUEL OXYGEN BURNER"
- CERAMIC ENGINEERING AND SCIENCE
  PROCEEDINGS, vol. 11, no. 1/02, 1 Janvier 1990,
  pages 175-195, XP000116965 LOO TJAY YAP:
  "NON-AXISYMMETRIC JET OXYGEN LANCING"

## Description

La présente invention concerne un procédé de chauffage de la charge d'un four de verre.

Les fours industriels, traditionnellement équipés d'aérobrûleurs brûlant un mélange d'air et de combustible, ont récemment vu apparaître des oxybrûleurs, brûlant un mélange de combustible et d'oxygène, se substituant en tout ou partie aux aérobrûleurs classiques. Généralement, l'oxybrûleur se présente, à la façon de ces aérobrûleurs, sous la forme d'un dispositif individuel à éjection localisée de fluides ce qui peut poser fréquemment des problèmes de profils de température et de transfert de chaleur dans la zone intéressée par la flamme de l'oxybrûleur.

Dans l'industrie du verre, les fours qui fonctionnaient traditionnellement avec des brûleurs à air sont de plus en plus équipés partiellement ou totalement de brûleurs oxycombustibles. Si les nouveaux fours peuvent être aisément conçus pour fonctionner complètement à l'oxygène (ou d'une manière générale avec des mélanges de combustibles et de comburants comportant plus de 50% volume d'oxygène et de préférence plus de 88% volume d'oxygène), les fours actuels ne peuvent être transformés complètement, c'est-à-dire en substituant complètement les brûleurs air simplement avec des brûleurs alimentés en oxygène, car les rendements de combustion de ces brûleurs sont différents ainsi que les géométries de flamme.

Ainsi, un brûleur air qui chauffe de façon homogène un bain de verre ne pourra être remplacé tel quel par un brûleur oxygène qui aura tendance à ne pas assurer la même couverture du bain de verre (à puissance égale).

Par ailleurs, les fours de verre comportent généralement des régénérateurs (ou récupérateurs) qui permettent de récupérer la chaleur des gaz chauds des flammes avant leur évacuation du four. Ces régénérateurs sont, dans le cas des fours " boucle" habituellement au nombre de deux et placés dans la partie amont du four près de la zone d'enfournement du verre dans le four. Dans le cas des fours à brûleurs transversaux, les régénérateurs sont situés de chaque côté du four. Dans les deux cas, ils sont en communication avec le four par des ouvertures nommées " port", une pour chaque régénérateur dans le cas des fours boucle, régulièrement réparties le long des parois latérales du four dans le cas des fours transversaux. Habituellement, les injections de combustible se font en dessous de ces ouvertures desquelles sortent des jets d'air préchauffés par la chaleur du régénérateur.

Dans les fours à brûleurs transversaux les fumées des flammes formées sont évacuées par les ouvertures (port) situées sur la paroi latérale opposée qui comporte aussi des injecteurs de combustible. Les flammes sont inversées régulièrement (par exemple toutes les vingt minutes) de manière à chauffer alternativement les régénérateurs (qui préchauffent l'air envoyé dans le four pour créer les flammes, ce qui économise l'énergie).

Pour substituer à l'ensemble air (provenant du "port") et combustible provenant des injecteurs un ensemble oxycombustible, la solution la plus évidente consiste à placer un brûleur oxycombustible à la place de l'un des injecteurs de combustible, à ne plus utiliser les autres injecteurs de combustible et à ne plus utiliser l'arrivée d'air via l'ouverture (port) située au-dessus desdits injecteurs. La longueur de la flamme oxygène ainsi obtenue sera à peu prés égale à celle de la flamme air créée auparavant, tout en remplaçant la puissance du brûleur air.

Cette solution a le désavantage de réduire considérablement la couverture du bain de verre par la flamme. En effet, la flamme air, par exemple, d'une largeur d'environ un mètre à un mètre cinquante, est remplacée par un flamme oxygène, d'une largeur de 40 centimètres environ.

Pour résoudre cette réduction de couverture, il peut être envisagé d'installer non pas un mais deux brûleurs de puissance moitié disposés côte à côte.

Cette solution a l'avantage de permettre une meilleure couverture, en largeur, du bain de verre par les flammes, mais elle présente l'inconvénient majeur de raccourcir la longueur de flamme de 40% environ.

Afin d'obtenir une flamme à base d'oxygène aussi large et longue qu'une flamme air équivalente, l'invention propose d'utiliser deux brûleurs oxycombustibles placés côte à côte et de réaliser une combustion dite étagée sur ces deux brûleurs en ajoutant une lance entre les deux brûleurs et en répartissant l'oxygène entre brûleurs et lances. En ne laissant de préférence que 60% environ de l'oxygène nécessaire à une combustion complète du débit de combustible dans les brûleurs et en reportant les 40% environ restant dans la lance, il est possible de réaliser une flamme oxygène ayant les mêmes caractéristiques de longueur et de largeur que la flamme air.

L'étagement de la combustion permet également de réduire la température de la flamme et de diminuer la production d'oxyde d'Azote NOx.

Il est connu de la demande WO 90/12760 d'augmenter l'efficacité d'un four de verre fonctionnant avec des brûleurs alimentés avec de l'air et un combustible, en rajoutant dans le four plusieurs brûleurs oxycombustibles, habituellement deux brûleurs oxycombustibles dans la zone d'enfournement ainsi que deux brûleurs oxycombustibles dans la zône d'affinage du verre, de manière à augmenter l'énergie thermique transférée au verre.

Cependant un tel système de "dopage" du four vient s'ajouter aux brûleurs existants, ce qui globalement augmente l'apport d'énergie.

En pratique, une telle solution est difficilement applicable car les fours de verre ne possèdent pas en général d'ouverture additionnelles par lesquelles on pourrait faire déboucher de nouveaux brûleurs dans le four.

Le brevet US 5.116.399 décrit une solution similaire en particulier pour des fours de type boucle (" ν ou υ" type flame, end-fired regenerative furnace" en anglais) dans laquelle un brûleur oxycombustible à haute impulsion de flamme (vitesse supérieure à 100 m/s) est placé sur la paroi frontale du four, dans la zône d'affinage de manière à apporter plus d'énergie pour fondre le verre et maintenir les ingrédients non fondus dans la zone de fusion, grâce à la haute impulsion de la flamme. L'inconvénient supplémentaire d'un tel procédé est que la flamme à haute impulsion fait voler des particules de verre non fondu dans tout le four ce qui est préjudiciable pour les émissions polluantes de poussière.

La brochure commerciale intitulée " GLASSMAN EUROPE'93-Industrial Experience with oxy fuel fired glass melters - presented at Glassman Europe 93 - Lyon - France - April, 28 1993" décrit le dopage (" boosting " en anglais) de fours de verres soit du type à brûleurs latéraux, soit du type boucle, avec régénérateurs ou récupérateurs, à l'aide d'un ou plusieurs brûleurs oxycombustibles placés dans le four, en plus des brûleurs air/combustible existants dans le four, de manière à augmenter le rendement du four.

Le brevet US 5242296 décrit un procédé de chauffage de la charge d'un four de verre (de type boucle on à brûleurs transversaux) utilisant un ensemble d'une lance à oxygène et d'un brûleur alimenté en gaz combustible et en gaz comburant de manière à diminuer la production de NOx.

Tous les documents cités ci-dessus sont relatifs au dopage de fours de verre avec des brûleurs oxycombustibles additionels qui sont supposés augmenter l'énergie transférée au verre. Cependant, aucun d'entre eux n'est relatif à la substitution des brûleurs air-combustible par des brûleurs oxycombustible et des problèmes à résoudre pour obtenir un four de verre de meilleur rendement avec une réduction de consommation du combustible.

La présente invention a pour objet un procédé de chauffage d'un four de verre dans lequel au moins un brûleur est placé dans une paroi d'un four de manière à chauffer le bain de verre, caractérisé en ce que l'on dispose au moins un ensemble d'un premier et d'un second brûleurs alimentés en gaz combustible et en gaz comburant comportant au moins 50% vol. d'oxygène dans l'une des parois du four à une distance l'un de l'autre au plus égale à 3 mètres, en ce que l'on dispose une lance à oxygène entre le premier et le second brûleurs, le premier brûleur, le second brûleur et la lance formant un ensemble de combustion, et en ce que de 30% vol. à 80% vol. de gaz comburant est envoyé dans la lance et de 20% vol. à 70% vol. de gaz comburant est envoyé aux premier et deuxième brûleurs dans des proportions sensiblement égales, de manière à créer une combustion retardée des gaz combustible et comburant et allonger sensiblement la longueur de la flamme comparée à la longueur de la flamme obtenue en l'absence d'injection de gaz comburant dans la lance.

De préférence, de 30% vol à 70% vol. de gaz comburant est envoyé dans la lance, le complément étant envoyé dans les brûleurs.

D'une manière plus générale, le procédé selon l'invention qui consiste à utiliser deux brûleurs oxycombustibles entre lesquels on dispose une lance à oxygène, peut être utilisé comme un procédé de réglage de la géométrie (longueur et largeur) d'une flamme oxycombustible de manière à simuler ou remplacer une flamme aérocombustible. Lorsque le débit d'oxygène dans la lance tend vers zéro, la longueur de la flamme diminue pour atteindre sa valeur minimale lorsque ce débit est nul. Toutefois entre 0% et 30% en volume d'oxygène injecté dans la lance, la longueur de la flamme reste courte et varie peu, sa longueur augmentant de façon sensible lorsque plus de 30% en volume d'oxygène est injecté dans la lance.

Au contraire, plus on augmente la quantité d'oxygène dans la lance, plus la longueur de la flamme augmente avec une longueur maximale obtenue pour une injection séparée combustible, oxydant, combustible c'est-à-dire avec 100% de l'oxydant injecté dans la lance.

Cependant, on a constaté que la luminosité de la flamme était dans ce cas nettement inférieure à la luminosité d'une flamme air ou d'une flamme obtenue à l'aide de deux brûleurs oxycombustibles adjacents, sans injection d'oxygène dans la lance. Or la luminosité d'une flamme (liée à la formation des suies) est directement liée au transfert radiatif de la flamme au bain de verre et l'utilisateur préfère en général obtenir une flamme qui soit au moins aussi lumineuse qu'une flamme obtenue à l'aide d'un brûleur oxycombustible sans injection d'oxygène dans la lance. Dans ce but, on a constaté, selon le procédé de l'invention qu'il fallait limiter l'injection d'oxygène dans la lance à au plus 80% vol, de préférence 70% vol de manière à obtenir une flamme suffisamment lumineuse et donc ayant un pouvoir radiatif aussi important que celui d'une flamme à l'air.

Dans le cas de fours de verre de type "end-port" ou "boucle" c'est-à-dire comportant des ouvertures d'injection d'air placées dans le fond du four et une flamme en forme de boucle au-dessus du bain de verre il est préférable de prévoir une injection d'oxygène dans la lance comprise entre 50% et 80% vol. du volume total d'oxygène délivré à l'ensemble de combustion et de préférence entre 50% et 70% vol, afin d'obtenir une flamme suffisamment longue qui atteint la zone d'affinage. Bien entendu l'obtention d'une flamme en forme de boucle dans les conditions ci-dessus est de préférence obtenue avec une injection supplémentaire d'oxygène, en général avec une lance ou avec un brûleur oxycombustible, disposé quelque part dans le four avant l'évacuation des fumées par le port opposé à celui situé au-dessus du système de combustion formé par les brûleurs oxycombustibles et la lance oxygène.

Dans le cas d'un four de type "side-port" ou fours à brûleurs transversaux dans lesquels les régénérateurs sont placés sur les côtés du four avec des ouvertures ("side-port") débouchant dans le four, la luminosité adéquate de la flamme est obtenue grâce à une injection d'oxygène comprise entre 30% et 80% vol et de préférence 30% à 70% vol. de l'oxygène total nécessaire à la combustion du combustible total.

De préférence, l'extrémité de la lance à oxygène sera sensiblement alignée avec les extrémités des brûleurs oxycombustibles, de préférence à égale distance de ceux-ci.

Cependant selon le type d'atmosphère que l'on voudra engendrer au-dessus du bain (oxydante ou réductrice) on pourra déplacer la lance vers le bas (atmosphère oxydante) ou vers le haut (atmosphère réductrice) par rapport au plan des brûleurs oxycombustibles.

Si l'on désigne par D la distance entre les extrémités des brûleurs (leur centre si ceux-ci sont des brûleurs cylindriques) et d la distance entre la lance d'injection oxygène et le plan défini par les deux brûleurs oxycombustibles généralement disposés sensiblement parallèlement, on devra respecter l'inégalité suivante (pour le rapport D/d), pour obtenir une combustion étagée acceptable :

$$2 \leq D/d \leq 20$$

Le terme "oxygène" employé ici désigne en général les gaz comburants, comportant au moins 50% vol. d'oxygène et de préférence au moins 88% vol. d'oxygène (incluant l'oxygène délivré en particulier par les appareils de production d'oxygène à adsorption connus sous la dénomination PSA (" Pressure Swing Adsorption"), VSA (Vacuum Switch Adsorption) etc...).

Selon un mode préférentiel de réalisation de l'invention, la lance est disposée de façon que l'axe de la lance soit situé sensiblement à mi-distance entre les axes des brûleurs et forme avec ceux-ci un angle inférieur à environ 10° de préférence également, la distance entre les axes des deux brûleurs du système de combustion constitué par deux brûleurs et une lance, est comprise entre 0,4 m et 2 m, selon le type de four.

Selon une autre caractéristique de l'invention, l'angle que fait l'axe d'un brûleur ou celui de la lance par rapport au plan horizontal est compris entre ± 25° et de préférence ± 20°.

Selon un autre aspect de l'invention également, la vitesse d'éjection de l'oxygène, en particulier dans la lance à oxygène, n'est pas supérieure à 60 m/s et est de préférence comprise entre 10 et 30 m/s, de manière à éviter l'envol des particules de verre dans le four et les problèmes d'émission polluante de poussières.

L'invention s'applique aussi bien aux fours de type boucle qu'aux fours à brûleurs transversaux, comme décrit ci-avant.

En général, on préfère conserver au système de combustion une certaine symétrie, c'est-à-dire que les deux brûleurs comburant-combustible sont identiques, disposés de préférence parallèlement ou symétriquement, avec la lance placée à mi distance de manière symétrique également. Les débits de comburant et de combustible sont aussi de préférence identiques dans chacun des brûleurs.

D'autres caractéristiques et avantages de la présente invention ressortiront de la description suivante de modes de réalisation, donnée à titre non limitatif, conjointement avec les figures qui représentent :

- la figure 1, une vue schématique en plan d'une portion de four de fusion de verre pourvu d'un ensemble de combustion selon l'invention ;
- la figure 2 est une vue schématique en coupe verticale d'un four de fusion de verre équipé d'ensembles de combustion selon l'invention.
- la figure 3 représente une ouverture ou " port " de four de fusion de verre avec différentes variantes de l'ensemble de combustion selon l'invention ;
- la figure 4 représente une courbe schématique de la luminosité de la flamme en fonction du pourcentage en volume d'oxygène total injecté dans la lance d'un ensemble de combustion ;
- la figure 5 illustre l'invention dans le cas d'un four "boucle" ;
- la figure 6 illustre l'invention dans le cas d'un four à brûleurs transversaux.

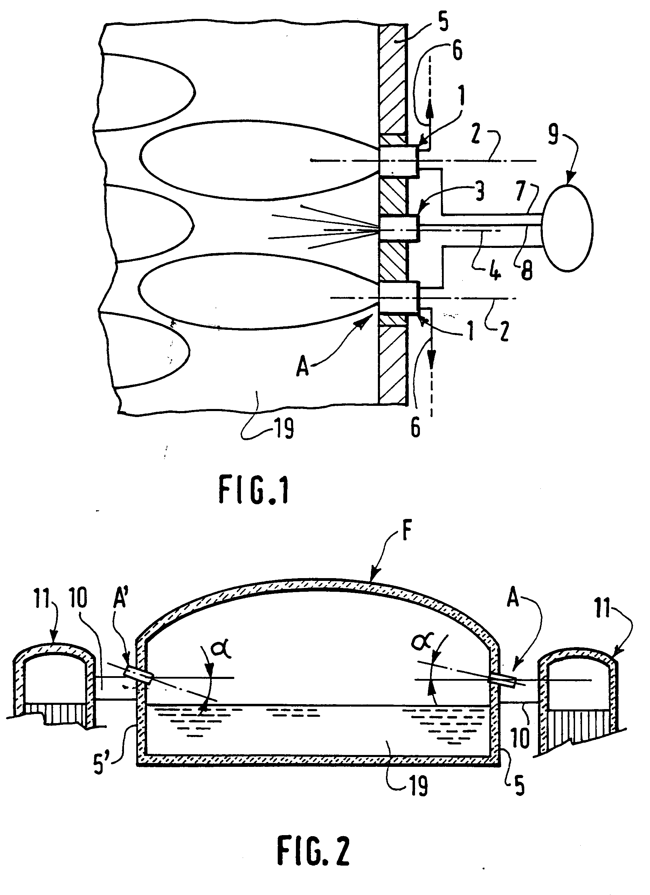

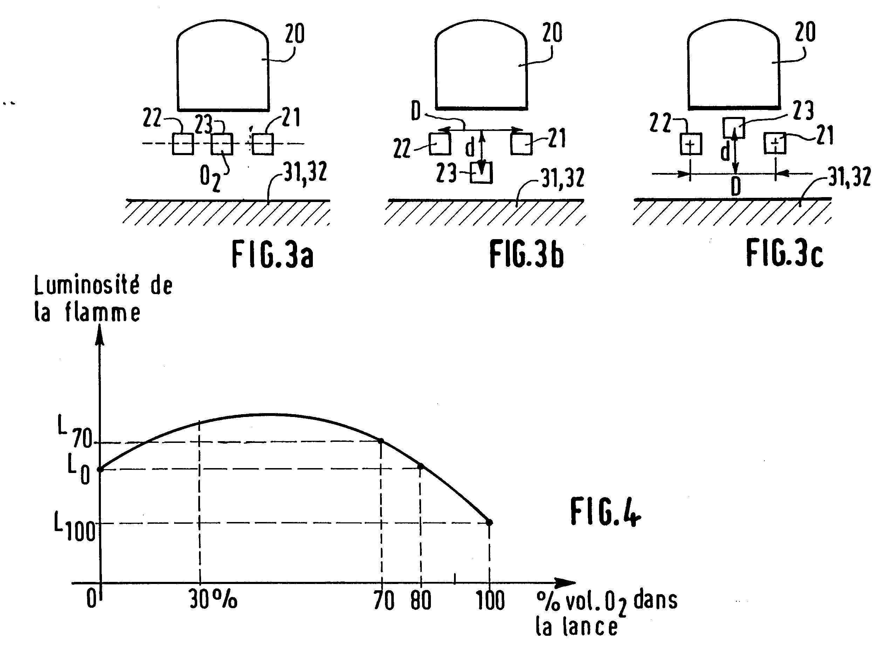

Sur la figure 1, est représenté un ensemble de combustion selon l'invention qui comprend deux brûleurs de type oxycombustible 1 dont les axes 2 sont sensiblement parallèles et au moins une lance oxygène 3 dont l'axe 4 est parallèle à celui des brûleurs. L'ensemble est monté dans une paroi 5 d'un four de verre, au dessus de la masse de verre chauffée 19. De préférence les axes 2 et 4 sont dans un même plan. Les axes 2 et 4 font de préférence un angle compris entre ± 20° par rapport à l'horizontal. L'axe 4 de la lance 3 est de préférence sensiblement équidistant des axes 2 des brûleurs 1. Les projections horizontales des axes 2 et 4 font entre elles un angle qui est compris entre ± 10°. Dans le cas où il est nécessaire d'avoir une plus grande largeur de flamme, il est possible dans le cadre de l'invention, de prévoir trois, quatre, cinq... brûleurs disposés les uns à côté des autres, comme expliqué ci-dessus, deux brûleurs successifs étant séparés par une lance d'injection d'oxygène. Il est également possible, en particulier lorsque les fours sont de grande largeur, de placer plusieurs ensembles de combustion dans des parois différentes du four, de préférence opposées. De préférence également, ces ensembles seront disposés en quinconce, l'axe d'un brûleur sur une paroi étant sensiblement à mi-distance entre les axes de deux brûleurs successifs de la paroi opposée.

La distance D entre les axes 2 de deux brûleurs adjacents dépend de la géométrie du four, de la puissance des brûleurs, etc... mais est toujours généralement inférieure à 3 mètres et de préférence comprise entre 0,4 m et 2 mètres environ. Il est souvent avantageux pour une combustion mieux répartie au dessus du bain d'avoir un système d'éjection d'oxygène divergent au niveau de l'extrémité de la lance : par exemple, en particulier si l'on veut que la quantité de mouvement ou impulsion de l'oxygène soit assez importante, on peut prévoir deux orifices semblables à l'extrémité de la lance, de même section, formant des jets divergents, séparés : on peut prévoir deux orifices semblables à l'extrémité de la lance, d'un angle inférieur ou égal à environ 20° engendrant de préférence des jets situés dans le plan des axes sensiblement parallèles des brûleurs.

Chaque brûleur comporte des lignes 6 et 7 d'alimentation, respectivement en combustible et en oxydant, chaque lance 3 étant pourvue d'une ligne 8 d'alimentation en oxydant. Selon un aspect de l'invention, les lignes d'oxydant d'un même ensemble de combustion sont reliées à une même source 9 d'oxydant comprenant plus de 50% vol. d'oxygène et de préférence au moins 88 % d'oxygène et constituée typiquement par une unité de séparation de l'air à adsorption du type dit PSA ("Pressure Swing Adsorption") ou VSA (Vacuum Switch Adsorption). Le combustible est avantageusement sous forme gazeuse, typiquement du gaz naturel, et peut être également constitué par une atomisation de combustible liquide par un gaz tel que de l'air, l'oxydant ou de la vapeur ou par pulvérisation mécanique ou tout autre moyen adapté. Selon un aspect de l'invention, les brûleurs d'un même ensemble de combustion ont les mêmes débits de combustible et d'oxydant, le débit total d'oxydant dans les deux brûleurs étant compris entre 20% et 70% et de préférence entre 30% et 70% vol du débit théorique nécessaire pour une combustion complète du combustible, le complément d'oxygène nécessaire à la combustion complète théorique du combustible étant apporté par la lance. Il est même recommandé de prévoir en général un apport d'oxygène un peu plus important que la quantité théorique nécessaire à la combustion complète de l'ordre d'au plus 10% vol. d'excès, de manière à éliminer tous les produits combustibles des fumées avant leur évacuation. Cet oxygène additionnel peut être dans certains cas fournis par une lance à oxygène additionnelle où un brûleur oxycombustible ayant une surstoechiométrie en oxygène.

Un même four peut comporter un ou plusieurs ensembles de combustion selon l'invention dans différentes sections, associés ou non à des aérobrûleurs tels que ceux figurés en 10 et accouplés à des régénérateurs 11 représentés dans le four de verre F de la figure 2.

La figure 3 représente une ouverture ou "port" d'un four de fusion de verre, équipé d'un système de combustion selon l'invention.

Sur la figure 3a est représentée une première configuration du système de combustion selon l'invention. Dans un four de verre fonctionnant avec des brûleurs air le port 20 est en communication avec un régénérateur du four, habituellement utilisé pour préchauffer l'air qui est ensuite envoyé à travers ce port dans le four tandis que le combustible est injecté dans le four par des injecteurs placés sous ce port 20.

Dans le cadre de l'invention, le port n'est plus utilisé pour décharger l'air préchauffé. Il peut continuer à être utilisé par contre, pour l'évacuation des fumées de combustion du four ou bien peut-être fermé, totalement ou partiellement. Sous ce port où sont habituellement placés les injecteurs de combustible, on place le système de combustion selon l'invention comportant un brûleur oxycombustible 22, une lance à oxygène 23 et un second brûleur oxycombustible 21, la lance et les deux brûleurs étant sensiblement dans le même plan et equidistants.

Sur la figure 3b, on a représenté une variante de la configuration de la fig. 3a dans laquelle on réalise une atmosphère oxydante directement au dessus du bain de verre 31, 32 en décalant la lance à oxygène 23 en direction de la surface du bain de verre 31, 32.

Le rapport entre la distance D entre les deux brûleurs (inférieure à 3 mètres) et la distance d entre la lance et le plan défini par les deux brûleurs 21, 22 est compris entre environ 2 et 20.

Sur la fig. 3c, on a représenté la configuration opposée à celle de la fig. 3 b qui correspond au cas où l'utilisateur veut une flamme réductrice au-dessus de son bain de verre, le rapport $D/d$ variant dans les mêmes proportions.

Sur cette figure 3 l'impulsion du flux d'oxydant émis par la lance 23 d'un ensemble est de préférence comprise entre 0,5 et 3 fois l'impulsion de flux d'oxydant et de combustible émise par un brûleur 21, 22 de l'ensemble.

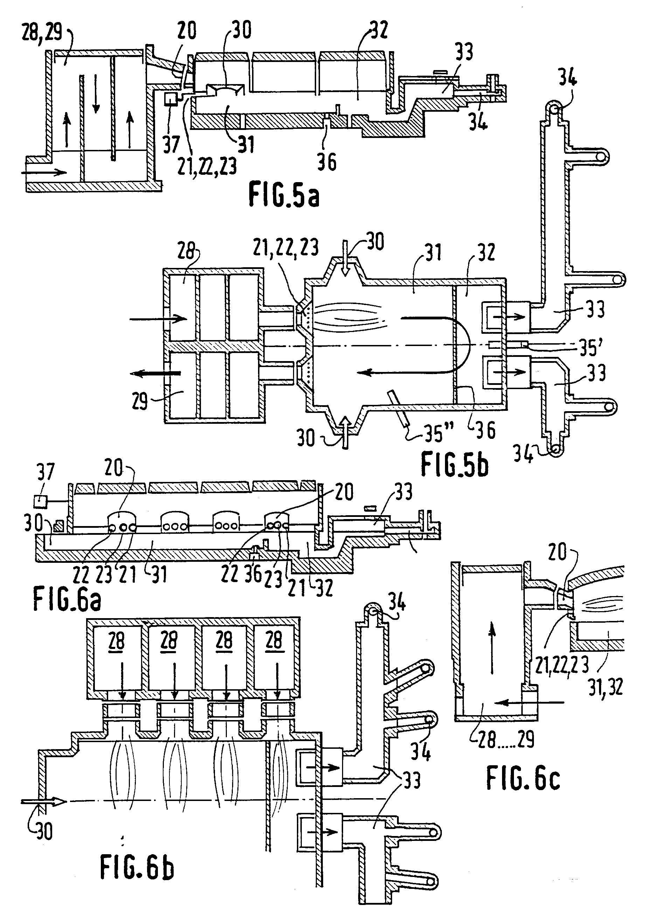

La figure 4 représente une courbe illustrant la luminosité de la flamme de l'ensemble de combustion en fonction du pourcentage d'oxygène injecté dans la lance par rapport à l'ensemble de l'oxygène fourni au système de combustion.

Lorsque le pourcentage d'oxygène fourni à la lance est égal à zéro, la luminosité de la flamme constituée par les deux brûleurs oxycombustibles adjacents est égale à $L_0$.

Lorsqu'on augmente le pourcentage d'oxygène injecté dans la lance, la luminosité de la flamme augmente jusqu'à ce qu'environ 40 à 60% vol. de l'oxygène soit injecté dans la lance, pour ensuite décroitre et atteindre une luminosité voisine de $L_0$, pour environ 80% de l'oxygène total injecté dans la lance. Pour 100% d'oxygène injecté dans la lance, on retrouve une configuration d'injection séparée de l'oxygène et du combustible qui correspond à une flamme de luminosité $L_{100}$ très nettement inférieure à $L_0$.

La luminosité $L_{70}$ correspondant à 70% d'oxygène injecté dans la lance est en général nettement supé-

rieure à $L_o$ et est considérée comme étant la limite préférée pour l'obtention d'une flamme de meilleure luminosité que celle d'un brûleur oxycombustible.

La fig. 5 représente la mise en oeuvre de l'invention dans un four "boucle".

La fig. 5a est une vue en coupe longitudinale d'un four boucle avec régénérateurs, équipé d'un système de combustion selon l'invention, la fig. 5b représentant une vue de dessus du même four.

Lorsqu'une combustion à l'air est utilisée dans un four boucle, l'air rentrant dans le four, par exemple par le régénérateur 28, est préchauffé dans ce régénérateur puis envoyé dans le four alors que du combustible est injecté sous le port 20, engendrant ainsi une longue flamme en forme de boucle, qui après avoir atteint le fond du four (zone d'affinage) revient en direction de la paroi d'entrée du four, les fumées étant évacuées par le port correspondant au régénérateur 29 qui est alors chauffé par échange thermique entre les fumées et les réfractaires disposés dans les chicanes du régénérateur 29. Toutes les vingt minutes environ, on commute le système, c'est à dire que l'on injecte l'air via le régénérateur 29, le combustible via les injecteurs placés sous le port d'entrée d'air du régénérateur 29 et les fumées sont évacuées via le régénérateur 28.

En utilisant le système de l'invention, c'est-à-dire en plaçant l'ensemble de combustion 21, 22, 23 sous le " port " 20 (comme expliqué sur la fig. 3) le régénérateur par exemple 28 correspondant au port 20 placé au-dessus de l'ensemble de combustion n'est plus utilisé. Le régénérateur 29 est utilisé pour évacuer les fumées uniquement.

Le verre continue à alimenter le four via les enfournements 30, la flamme chauffant successivement la zone de fusion 31 et la zone d'affinage 32 placée au dela de la rangée des bouillonneurs 36. Le verre affiné fondu s'écoule via les canaux 33 vers les systèmes d'alimentation des machines de formage du verre ou " feeder " 34. On a représenté schématiquement par 37 le système de vannes (non détaillé sur la fig. 6) qui permet de répartir l'oxygène venant de l'appareil de production (p. ex. un "VSA" ou un stockage d'oxygène liquide, système de vannes connu en soi pour l'homme de métier.

La figure 6 représente l'application du système de combustion selon l'invention sur un four dit à brûleurs transversaux.

La figure 6a est une vue en coupe verticale dans la direction d'écoulement du verre, d'un four de ce type, la figure 6b une vue partielle de dessus et la figure 6c une vue en coupe verticale perpendiculairement à la direction d'écoulement du verre dans le four.

Ce type de four comporte habituellement des systèmes de combustion à air placés sur chaque paroi latérale et fonctionnant alternativement toutes les 20 à 30 minutes environ.

Selon l'invention, on remplace au moins un ensemble de combustion à l'air constitué par un port d'alimentation en air et des injecteurs de combustible placés sous celui-ci par un ensemble de combustion selon l'invention, dans l'une des configurations de la fig. 3. Il est possible de remplacer un ou plusieurs ensemble (port + injecteurs de combustibles) adjacents, non adjacents, opposés ou non par un ensemble de combustion selon l'invention. Le système selon l'invention n'utilisant pas de régénérateur, il est cependant préférable de conserver au four une certaine symétrie en plaçant des systèmes de combustion selon l'invention face à face, à moins par exemple, que l'un des régénérateurs ne soit endommagé, auquel cas il peut être avantageux de ne placer qu'un seul système de combustion selon l'invention à un emplacement correspondant au régénérateur.

**Revendications**

1. Procédé de chauffage de la charge d'un four de verre dans lequel au moins un brûleur est placé dans une paroi d'un four de manière à chauffer le bain de verre, caractérisé en ce que l'on dispose au moins un ensemble d'un premier et d'un second brûleur (21, 22) alimentés en gaz combustible et en gaz comburant comportant au moins 50% vol. d'oxygène, dans l'une des parois du four (20) à une distance (D) au plus égale à 3 mètres l'un de l'autre, en ce que l'on dispose une lance à oxygène (23) entre le premier et le second brûleurs (21, 22), le premier brûleur (21), le second brûleur (22) et la lance (23) formant un ensemble de combustion, et en ce que de 30% vol. à 80% vol. de gaz comburant est envoyé dans la lance (23) et de 20% vol. à 70% vol. de gaz comburant est envoyé aux premier et second brûleurs (21, 22), dans des proportions sensiblement égales, de manière à créer une combustion retardée des gaz combustible et comburant et à allonger sensiblement la longueur de la flamme comparée à la longeur de la flamme obtenue en l'absence d'injection de gaz comburant dans la lance (23).

2. Procédé selon la revendication 1, caractérisé en ce que de 30% vol. à 70% vol. de gaz comburant est envoyé dans la lance (23), le complément étant envoyé dans les brûleurs (21, 22).

3. Procédé selon l'une des revendications 1 ou 2, caractérisé en ce que le premier et second brûleurs (21, 22) ainsi que la lance (23) sont sensiblement situés dans le même plan.

4. Procédé selon l'une des revendications 1 ou 2, caractérisé en ce que la lance (23) se trouve dans un plan décalé par rapport au plan des premier et second brûleurs (21, 22).

5. Procédé selon la revendication 4, dans laquelle les premier et second brûleurs (21, 22) sont disposés à une distance D l'un de l'autre, caractérisé en ce que la lance (23) est décalée par rapport au plan des premier et deuxième brûleurs d'une distance d telle que :

$$2 \leq D/d \leq 20$$

6. Procédé selon l'une des revendications 4 ou 5, caractérisé en ce que, par rapport au bain de verre, la lance (23) est placée au dessus du plan des premier et second brûleurs (21, 22), de manière à obtenir une atmosphère réductrice au dessus du bain.

7. Procédé selon l'une des revendications 4 ou 5, caractérisé en ce que, par rapport au bain de verre, la lance (23) est placée en dessous du plan des premier et second brûleurs (21, 22), de manière à obtenir une atmosphère oxydante au dessus du bain.

8. Procédé selon l'une des revendications 1 à 7 dans lequel le four est un four de type boucle comportant au moins deux ouvertures en communication avec un régénérateur, placées dans la paroi arrière du four à proximité de la zone d'enfournement du verre, caractérisé en ce que l'ensemble de combustion est placé au dessous d'une ouverture en communication un régénérateur, en ce qu'une lance à comburant ou brûleur alimenté en combustible et en carburant, ledit comburant comportant plus de 50% vol. d'oxygène est disposé dans le four avant l'ouverture d'évacuation des fumées, et en ce que entre 50% vol et 80% vol. de comburant alimentant l'ensemble de combustion est injecté dans la lance.

9. Procédé selon l'une des revendications 1 à 7, le four étant du type à brûleurs transversaux, dans lequel il existe une pluralité d'ensembles de port d'injection d'air et d'injection de combustible disposés sur au moins une paroi du four, caractérisé en ce que au moins un ensemble de combustion est installé sur l'une des parois du four pour remplacer un ensemble de port d'injection d'air et d'injecteurs de combustible.

10. Procédé selon une des revendication 1 à 9, caractérisé en ce que l'axe de la lance est situé sensiblement à mi-distance entre les axes des brûleurs (21, 22).

11. Procédé selon la revendication 10, caractérisé en ce que l'axe de lance (23) forme avec un axe de brûleur (21,22) un angle n'excédant pas 10°.

12. Procédé selon l'une des revendications précédentes, caractérisé en ce que la distance entre les axes des brûleurs (21, 22) est comprise entre 0,4 et 2 mètres.

13. Procédé selon l'une des revendications précédentes, caractérisé en ce que la lance (23) comporte au moins deux orifices d'éjection d'oxydant divergeant dans le plan des axes.

14. Procédé selon l'une des revendications précédentes, caractérisé en ce que l'oxydant alimentant les brûleurs (21,22) et la lance (23) comprend au moins 88% d'oxygène.

15. Procédé selon la revendication 14, caractérisé en ce que les brûleurs (21,22) d'un ensemble ont les mêmes débits de combustible et d'oxydant.

16. Procédé selon l'une des revendications précédentes, caractérisé en ce que l'impulsion du flux d'oxydant émis par la lance (23) d'un ensemble est comprise entre 0,5 et 3 fois l'impulsion du flux d'oxydant et de combustible émise par un brûleur (21, 22) de l'ensemble.

17. Procédé selon l'une des revendications 9 à 12, caractérisé en ce que l'oxydant est fourni par une installation (9) de séparation de l'air par adsorption.

**Claims**

1. Process for heating the charge of a glass furnace wherein at least one burner is placed in a wall of a furnace so as to heat the glass bath, characterized in that there is provided at least one assembly of a first and second burner (21, 22) supplied with a fuel gas and an oxidizing gas including at least 50 % oxygen by volume, in one of the walls of the furnace (20) at a distance (D) at most equal to 3 metres from each other, in that an oxygen lance (23) is used between the first and second burners (21, 22), the first burner (21), the second burner (22) and the lance (23) forming a combustion assembly, and in that 30 % by volume to 80 % by volume of the oxidizing gas is conveyed to the lance (23) and 20 % by volume to 70 % by volume of the oxidizing gas is conveyed to the first and second burners (21, 22), in substantially equal proportions, so as to create a retarded combustion of the fuel and oxidizing gases and substantially to lengthen the flame as compared with the length of the flame obtained in the absence of an injection of oxidizing gas in the lance (23).

2. Process according to claim 1, characterized in that 30 % by volume to 70 % by volume of oxidizing gas is conveyed to the lance (23), the complement being conveyed to the burners (21, 22).

3. Process according to either of claims 1 or 2, characterized in that the first and second burners (21, 22) as well as the lance (23) are substantially situated in the same plane.

4. Process according to either of claims 1 or 2, characterized in that the lance (23) is situated in a plane offset with respect to the plane of the first and second burners (21, 22).

5. Process according to claim 4, wherein the first and second burners (21, 22) are situated at a distance D from each other, characterized in that the lance (23) is offset with respect to the plane of the first and second burners by a distance d such that :

$$2 \leq D/d \leq 20$$

6. Process according to either of claims 4 or 5, characterized in that, with respect to the glass bath, the lance (23) is placed above the plane of the first and second burners (21, 22), so as to obtain a reducing atmosphere above the bath.

7. Process according to either of claims 4 or 5, characterized in that, with respect to the glass bath, the lance (23) is placed below the plane of the first and second burners (21, 22), so as to obtain an oxidizing atmosphere above the bath.

8. Process according to one of claims 1 to 7, wherein the furnace is a loop-type furnace having at least two openings communicating with a regenerator, placed in the rear wall of the furnace in the vicinity of the glass charging zone, characterized in that the combustion assembly is placed below an opening communicating with a regenerator, in that an oxidant lance or a burner supplied with fuel and oxidant, the said oxidant including more than 50 % by volume of oxygen, is positioned in the furnace before the fume extraction is opened, and in that between 50 % and 80 % by volume of oxidant supplying the combustion assembly is injected in the lance.

9. Process according to one of claims 1 to 7, the furnace being of the type with transverse burners, in which there exist a plurality of air injection and fuel injection port assemblies positioned on at least one of the walls of the furnace, characterized in that at least one combustion assembly is installed on one of the walls of the furnace to replace an air injection and fuel injection port assembly.

10. Process according to one of claims 1 to 9, characterized in that the axis of the lance is situated substantially mid-way between the axes of the burners (21, 22).

11. Process according to claim 10, characterized in that the axis of the lance (23) forms with an axis of a burner (21, 22) an angle not exceeding 10°.

12. Process according to one of the preceding claims, characterized in that the distance between the axes of the burners (21, 22) is between 0.4 and 2 metres.

13. Process according to one of the preceding claims, characterized in that the lance (23) has at least two orifices for injecting oxidant diverging in the plane of the axes.

14. Process according to one of the preceding claims, characterized in that the oxidant supplying the burners (21, 22) and the lance (23) includes at least 88 % oxygen.

15. Process according to claim 14, characterized in that the burners (21, 22) of an assembly have the same flow rates for fuel and oxidant.

16. Process according to one of the preceding claims, characterized in that the impulse of the flow of oxidant emitted by the lance (23) of an assembly is between 0.5 to 3 times the impulse of the flow of oxidant and fuel emitted by a burner (21, 22) of the assembly.

17. Process according to one of claims 9 to 12, characterized in that the oxidant is provided by a plant (9) for separating air by adsorption

**Patentansprüche**

1. Verfahren zum Erhitzen der Charge eines Glasschmelzofens, in welchem wenigstens ein Brenner in einer Ofenwand angeordnet ist, um das Glasschmelzbad zu erhitzen, dadurch gekennzeichnet, daß wenigstens eine Einheit aus einem ersten und einem zweiten Brenner (21, 22), die mit Heizgas und wenigstens 50 Vol.% Sauerstoff enthaltendem Sauerstoffträgergas gespeist werden, in einer der Ofenwände (20) in einem Abstand (D) voneinander von höchstens 3 m angeordnet wird, dadurch, daß eine Sauerstofflanze (23) zwischen dem ersten und dem zweiten Brenner (21, 22) angeordnet wird, wobei der erste Brenner (21) der zweite Brenner (22) und die Lanze (23) eine Verbrennungs-Einheit bilden, und dadurch, daß 30 Vol.% bis 80 Vol.% Sauerstoffträgergas in Lanze (23) zugeführt werden und 20 Vol.% bis 70 Vol.% Sauerstoffträgergas im ersten und zweiten Brenner (21, 22) in etwa gleichen Anteilen zugeführt werden, um eine verzögerte Verbrennung von Heizgas und Sauerstoffträgergas herbeizuführen und die Länge der Flamme im Vergleich zur Länge der Flamme, die bei fehlender Injizierung von Sauerstoffträgergas in Lanze (23) erhalten wird, deutlich zu verlängern.

2. Verfahren nach Anspruch 1, dadurch gekennzeichnet, daß 30 Vol.% bis 70 Vol.% Sauerstoffträgergas in Lanze (23) zugeführt werden und die komplementäre Menge in den Brennern (21, 22) zugeführt wird.

3. Verfahren nach einem der Ansprüche 1 oder 2, dadurch gekennzeichnet, daß der erste und zweite Brenner (21, 22) sowie die Lanze (23) ungefähr in gleicher Ebene angeordnet sind.

4. Verfahren nach einem der Ansprüche 1 oder 2, dadurch gekennzeichnet, daß sich die Lanze (23) in einer im Verhältnis zur Ebene des ersten und zweiten Brenners (21, 22) versetzt angeordneten Ebene befindet.

5. Verfahren nach Anspruch 4, in welchem der erste und zweite Brenner (21, 22) in einem Abstand D voneinander angeordnet sind, dadurch gekennzeichnet, daß die Lanze (23) im Verhältnis zur Ebene des ersten und zweiten Brenners in einem Abstand d so versetzt angeordnet ist, daß:

$$2 \leq D/d \leq 20$$

6. Verfahren nach einem der Ansprüche 4 oder 5, dadurch gekennzeichnet, daß in bezug auf das Glasschmelzbad die Lanze (23) oberhalb der Ebene des ersten und zweiten Brenners (21, 22) angeordnet ist, um eine reduzierende Atmosphäre über dem Bad zu erhalten.

7. Verfahren nach einem der Ansprüche 4 oder 5, dadurch gekennzeichnet, daß in bezug auf das Glasschmelzbad die Lanze (23) unterhalb der Ebene des ersten und zweiten Brenners (21, 22) angeordnet ist, um eine oxidierende Atmosphäre über dem Bad zu erhalten.

8. Verfahren nach einem der Ansprüche 1 bis 7, in welchem der Ofen ein Ofen des U-Flammenwannen-Typs ist, der wenigstens zwei in Verbindung mit einem Regenerator stehende Öffnungen aufweist, die in der hinteren Wand des Ofens in Nähe des Glaseinlage-Bereichs angeordnet sind, dadurch gekennzeichnet, daß die Verbrennungs-Einheit unterhalb einer in Verbindung mit einem Regenerator stehenden Öffnung angeordnet ist, dadurch, daß eine Sauerstoffträger-Lanze oder ein mit Brennstoff und mit Treibstoff gespeister Brenner im Ofen vor der Rauchabzugs-Öffnung angeordnet ist, wobei der Sauerstoffträger mehr als 50 Vol.% Sauerstoff enthält, und dadurch, daß zwischen 50 Vol.% und 80 Vol.% des Sauerstoffträgers, der die Verbrennungs-Einheit versorgt, in der Lanze injiziert wird.

9. Verfahren nach einem der Ansprüche 1 bis 7, wobei der Ofen vom Typ der Querbrenner ist, in welchem eine Vielzahl von Öffnungs-Einheiten zur Luftinjizierung und Brennstoffinjizierung auf wenigstens einer Ofenwand vorhanden ist, dadurch gekennzeichnet, daß wenigstens eine Verbrennungs-Einheit auf einer Ofenwand angebracht ist, um eine Einheit aus Luftinjizierungs-Öffnung und Brennstoff-Injektoren zu ersetzen.

10. Verfahren nach einem der Ansprüche 1 bis 9, dadurch gekennzeichnet, daß sich die Achse der Lanze ungefähr in mittlerem Abstand zwischen den Achsen der Brenner (21, 22) befindet.

11. Verfahren nach Anspruch 10 dadurch gekennzeichnet, daß die Achse der Lanze (23) mit der Achse der Brenner (21, 22) einen Winkel bildet, der 10° nicht überschreitet.

12. Verfahren nach einem der vorhergehenden Ansprüche, dadurch gekennzeichnet, daß der Abstand zwischen den Achsen der Brenner (21, 22) im Bereich zwischen 0,4 und 2 m liegt.

13. Verfahren nach einem der vorhergehenden Ansprüche, dadurch gekennzeichnet, daß die Lanze (23) wenigstens zwei Öffnungen für den Oxidationsmittel-Ausstoß aufweist, die in der Ebene der Achsen auseinanderlaufen.

14. Verfahren nach einem der vorhergehenden Ansprüche, dadurch gekennzeichnet, daß das Oxidationsmittel, welches die Brenner (21, 22) und die Lanze (23) speist, wenigstens 88% Sauerstoff enthält.

15. Verfahren nach Anspruch 14, dadurch gekennzeichnet, daß die Brenner (21, 22) einer Einheit die gleichen Brennstoff- und Oxidationsmittel-Durchsätze haben.

16. Verfahren nach einem der vorhergehenden Ansprüche, dadurch gekennzeichnet, daß der Impuls des von der Lanze (23) einer Einheit abgegebenen Oxidationsmittel-Stroms dem 0,5 bis 3-fachen Impuls des von einem Brenner (21, 22) der Einheit abgegebenen Oxidationsmittel- und Brennstoff-Stroms entspricht.

17. Verfahren nach einem der Ansprüche 9 bis 12, dadurch gekennzeichnet, das das Oxidationsmittel von einer Anlage (9) zur Trennung von Luft durch Adsorption geliefert wird.

FIG.1

FIG. 2

EP 0 782 973 B1

## FIG.3a

20

22 23 21

$O_2$ 31,32

**FIG.3a**

## FIG.3b

20

D

22 21

d

23 31,32

**FIG.3b**

## FIG.3c

20

22 23 21

d

D 31,32

**FIG.3c**

Luminosité de la flamme

$L_{70}$

$L_0$

$L_{100}$

0   30%   70   80   100   % vol.$O_2$ dans la lance

**FIG.4**

FIG.5a

FIG.5b

FIG.6a

FIG.6b

FIG.6c